# EUROPÄISCHE PATENTSCHRIFT

(11) **EP 3 515 773 B1**
(45) Veröffentlichungstag und Bekanntmachung des Hinweises auf die Patenterteilung: **28.07.2021**
(21) Anmeldenummer: 17769064.1
(22) Anmeldetag: 19.09.2017
(51) Int. Cl.: B60T 13/74, B60T 13/66, B60T 8/36, B60T 8/40

(54) **ELEKTROHYDRAULISCHES KRAFTFAHRZEUGSTEUERGERÄT**
ELECTROHYDRAULIC MOTOR VEHICLE CONTROL DEVICE
APPAREIL ÉLECTRO-HYDRAULIQUE DE COMMANDE DE VÉHICULE À MOTEUR

(30) Priorität: 21.09.2016 DE 102016218095
(43) Veröffentlichungstag der Anmeldung: 31.07.2019
(73) Patentinhaber: Continental Teves AG & Co. OHG, 60488 Frankfurt am Main (DE)
(72) Erfinder: FEIGEL, Hans-Jörg, 61191 Rosbach (DE)
(74) Vertreter: Continental Corporation
(86) Internationale Anmeldenummer: PCT/EP2017/073548
(87) Internationale Veröffentlichungsnummer: WO 2018/054864

(56) Entgegenhaltungen:
- EP-A2- 1 016 515
- WO-A1-02/060734
- DE-A1- 4 133 879
- DE-A1- 10 350 316
- DE-A1-102009 056 765
- DE-A1-102012 213 216
- JP-A- 2015 098 289
- US-A1- 2009 189 439
- US-A1- 2015 075 156

## Beschreibung

Die Erfindung betrifft ein elektrohydraulisches Kraftfahrzeugsteuergerät gemäß dem Oberbegriff von Anspruch 1.

Aus der DE 10 2013 202 350 A1 ist eine Bremssteuergerät mit einer Hydraulikeinheit, einer elektronischen Kontrolleinheit und einem Elektromotor zum Antreiben einer Pumpe bekannt, welches einen Wegsensor zum Erfassen einer Bremsbetätigungsweges umfasst, wobei der Wegsensor-Aufnehmer auf einer in der elektronischen Kontrolleinheit angeordneten Leiterplatte angeordnet ist.

Die US 2009/0189439 A1 beschreibt ein Bremssystem mit einem Hauptbremszylinder mit vorgeschaltem Vakuumbremskraftverstärker und einer separaten hydraulischen Kontrolleinheit mit Ventilen. Ein Wegsensor zur Erfassung einer Bremspedalbetätigung wird nicht erwähnt.

In der JP 2015 098289 A wird eine Bremsvorrichtung mit einer Hauptbremszylindereinheit mit einem ersten Gehäuseteil, einem zweiten Gehäuseteil und einer ECU mit einer Leiterplatte beschrieben, wobei der ersten Gehäuseteil einen Hauptbremszylinder und der zweite Gehäuseteil Ventile umfasst. Weiterhin ist ein Hubsensor vorgesehen, der im Bereich des Hauptbremszylinders des ersten Gehäuseteil angeordnet ist. Bezüglich des Hubsensors wird lediglich ausgeführt, dass in dem Hubsensor ein Hallelement enthalten ist.

Aus der WO 2013/023953 A1 ist eine Bremsbetätigungseinheit bekannt, bei welcher ein durch den Fahrzeugführer betätigbarer Hauptbremszylinder, eine elektrisch steuerbare Druckbereitstellungseinrichtung und eine Ventil-Anordnung in einem Gehäuse angeordnet sind. Der Elektromotor der Druckbereitstellungseinrichtung ist an einer ersten Seitenfläche des Gehäuses befestigt. Die elektronische Steuer- und Regeleinheit der Bremsbetätigungseinheit ist an der dem Elektromotor entgegengesetzten, zweiten Seitenfläche des Gehäuses angeordnet. Die Bremsbetätigungseinheit umfasst eine Wegsensorik zur Erfassung einer Bremspedalbetätigung, wobei die Wegsensorik an der zweiten Seitenfläche des Gehäuses 10 angeordnet ist, d.h. an der Seitenfläche zu der elektronischen Steuer- und Regeleinheit. Die Bremsbetätigungseinheit umfasst weiterhin eine Motorpositionssensorik zur Erfassung einer Lage/Position des Elektromotors, z.B. einen Rotorlagesensor. Auch diese Motorpositionssensorik ist an der dem Elektromotor entgegengesetzten, zweiten Seitenfläche des Gehäuses angeordnet. Die elektronische Steuer- und Regeleinheit dient der Ansteuerung der Ventil-Anordnung und der Druckbereitstellungseinrichtung und ihr werden die Ausgangssignale der Wegsensorik und der Motorpositionssensorik zugeführt. Bei der Integration der Motorpositionssensorik und der Bremspedalbetätigungsensorik in die gegenüber dem Elektromotor angeordneten elektronischen Steuer- und Regeleinheit können die beiden Sensoren aufgrund der Nähe zu den Ventilen durch die magnetischen Fremdfelder (z.B. der Ventilspulen) beeinflusst und ihre Signale verfälscht werden. Weiterhin ist für die mechanische Übertragung der Motordrehbewegung auf die Seite der elektronischen Steuer- und Regeleinheit ein aufwendiges und teures Getriebe vorzusehen.

Der vorliegenden Erfindung liegt die Aufgabe zugrunde, die genannten Nachteile zu beheben. Weiterhin soll ein kompaktes elektrohydraulisches Kraftfahrzeugsteuergerät, insbesondere für eine "Brake-by-wire"-Bremsanlage für Kraftfahrzeuge, bereitgestellt werden, welches kostengünstig herzustellen ist.

Diese Aufgabe wird erfindungsgemäß durch ein elektrohydraulisches Kraftfahrzeugsteuergerät gemäß Anspruch 1 gelöst.

Der Erfindung liegt der Gedanke zugrunde, in einem elektrohydraulischen Kraftfahrzeugsteuergerät mit einer Hydraulikeinheit mit elektrisch betätigbaren Ventilen und einem bremspedalbetätigbaren Hauptbremszylinder, einem Elektromotor zum Antreiben einer elektrisch steuerbaren, hydraulischen Druckquelle des Kraftfahrzeugsteuergeräts, welcher an einer erste Seitenfläche der Hydraulikeinheit angeordnet ist, und einer elektronischen Kontrolleinheit, welche eine erste Leiterplatte mit elektrischen und/oder elektronischen Bauelementen zur Ansteuerung der Ventile umfasst, eine zweite Leiterplatte vorzusehen, welche in einem Bereich der ersten Seitenfläche der Hydraulikeinheit angeordnet ist, wobei auf der zweiten Leiterplatte ein erstes Sensorelement zur Erfassung einer Bremspedalbetätigung angeordnet ist.

Die Aufgabe wird erfindungsgemäß auch durch ein elektrohydraulisches Kraftfahrzeugsteuergerät gelöst, welches eine Hydraulikeinheit mit elektrisch betätigbaren Ventilen und einem bremspedalbetätigbaren Hauptbremszylinder, eine elektronische Kontrolleinheit, welche eine erste Leiterplatte mit elektrischen und/oder elektronischen Bauelementen zur Ansteuerung der Ventile umfasst, und einen Elektromotor zum Antreiben einer elektrisch steuerbaren, hydraulischen Druckquelle, welcher an einer erste Seitenfläche der Hydraulikeinheit angeordnet ist, umfasst, wobei eine zweite Leiterplatte vorgesehen ist, welche in einem Bereich der ersten Seitenfläche der Hydraulikeinheit angeordnet ist, wobei auf der zweiten Leiterplatte zumindest ein zweites Sensorelement zur Erfassung einer Lage oder Position des Elektromotors angeordnet ist.

Ein Vorteil der Erfindung liegt darin, dass das erste und/oder das zweite Sensorelement weniger durch die elektrischen und/oder elektronischen Bauelemente zur Ansteuerung der Ventile in der elektronischen Kontrolleinheit (z.B. die Magnetfelder der Ventilspulen) gestört werden. Weiterhin kann durch die Anordnung des ersten und/oder des zweiten Sensorelements auf der zweiten Leiterplatte im Bereich der elektromotorseitigen Seitenfläche der Hydraulikeinheit Platz auf der ersten Leiterplatte eingespart werden bzw. es können nun Sensorprinzipien für die erste und/oder die zweite Sensorvorrichtung in Betracht gezogen werden, welche aufgrund des begrenzten Bauraums auf der ersten Leiterplatte bisher nicht in Betracht kamen.

Die elektronische Kontrolleinheit ist bevorzugt an einer von der ersten Seitenfläche verschiedenen, zweiten Seitenfläche der Hydraulikeinheit angeordnet. Besonders bevorzugt liegt die zweite Seitenfläche der ersten Seitenfläche gegenüber, d.h. die elektronische Kontrolleinheit ist an der dem Elektromotor entgegengesetzten Seitenfläche angeordnet, auch um eine einfache elektrische oder magnetische Verbindung zwischen den Ventilen und der Kontrolleinheit zu ermöglichen.

Das erste Sensorelement ist bevorzugt auf einer der Hydraulikeinheit zugewandten Fläche der zweiten Leiterplatte angeordnet, da so aufgrund der größeren räumlichen Nähe zur Hydraulikeinheit die Störanfälligkeit der Messung der Bremspedalbetätigung geringer ist.

Bevorzugt erfasst das erste Sensorelement eine Verschiebung oder Position eines verschiebbaren Teils des Hauptbremszylinders. Besonders bevorzugt wird eine durch die Bremsbetätigung hervorgerufene Verschiebung eines Kolbens des Hauptbremszylinders erfasst.

Bevorzugt ist das erste Sensorelement Teil einer ersten Sensorvorrichtung zur Erfassung einer Bremspedalbetätigung. Besonders bevorzugt umfasst die erste Sensorvorrichtung einen auf dem verschiebbaren Teil des Hauptbremszylinders angeordneten Weggeber und einen Messaufnehmer, welcher durch das erste Sensorelement gebildet wird oder dieses umfasst.

Bevorzugt ist neben dem ersten Sensorelement auch die gesamte oder zumindest ein Teil der dem ersten Sensorelement bzw. der ersten Sensorvorrichtung zugeordnete Elektronik, insbesondere Auswerteelektronik, auf der zweiten Leiterplatte angeordnet.

Bevorzugt wird bei der ersten Sensorvorrichtung zur Erfassung einer Bremspedalbetätigung, welche das erste Sensorelement umfasst, ein Wirbelstrom-Meßprinzip angewendet, da dieses unempfindlich gegen magnetische Fremdfelder ist.

Gemäß einer Weiterbildung des erfindungsgemäßen Kraftfahrzeugsteuergeräts ist auf der zweiten Leiterplatte zumindest ein zweites Sensorelemente zur Erfassung einer Lage oder Position des Elektromotors (30) angeordnet. Besonders bevorzugt ist ein der Erfassung der Rotorlage oder eines Drehwinkels des Rotors des Elektromotors dienender Rotorlagensensor auf der zweiten Leiterplatte vorhanden.

Das zweite Sensorelement oder die zweiten Sensorelemente ist/sind bevorzugt auf einer dem Elektromotor zugewandten Fläche der zweiten Leiterplatte angeordnet, da so aufgrund der größeren räumlichen Nähe zum Elektromotor die Störanfälligkeit der Messung der Lage/Position des Elektromotors geringer ist.

Bevorzugt ist das zweite Sensorelement (bzw. sind die zweiten Sensorelemente) Teil einer zweiten Sensorvorrichtung zur Erfassung einer Lage oder Position des Elektromotors. Besonders bevorzugt umfasst die zweite Sensorvorrichtung einen auf einem rotierenden Teil des Elektromotors angeordneten Positionsgeber und einen Messaufnehmer, welcher durch das zweite Sensorelement gebildet wird oder dieses umfasst (bzw. durch die zweiten Sensorelemente gebildet wird oder diese umfasst).

Bevorzugt ist neben dem zweiten Sensorelement auch die gesamte oder zumindest ein Teil der dem zweiten Sensorelement bzw. der zweiten Sensorvorrichtung zugeordnete Elektronik, insbesondere Auswerteelektronik, auf der zweiten Leiterplatte angeordnet.

Bevorzugt wird bei der zweiten Sensorvorrichtung zur Erfassung einer Lage oder Position des Elektromotors, welche das oder die zweiten Sensorelemente umfasst, ein Wirbelstrom-Meßprinzip angewendet, da dieses unempfindlich gegen magnetische Fremdfelder ist.

Bevorzugt wird für die erste Sensorvorrichtung und die zweite Sensorvorrichtung das gleiche Messprinzip verwendet.

Die zweite Leiterplatte ist bevorzugt zwischen der ersten Seitenfläche der Hydraulikeinheit und dem Elektromotor angeordnet. Hierdurch kann die Leitungsführung der Sensorsignale (von erstem und/oder zweitem Sensorelement) direkt auf der zweiten Leiterplatte erfolgen. Dies ist nicht nur kostengünstig, es spart auch Baulänge des Motors.

Gemäß einer Weiterbildung der Erfindung weist die zweite Leiterplatte eine Ausnehmung auf, durch welche ein Teil der Druckquelle, insbesondere ein Zylinder der Druckquelle, ragt bzw. hindurchgeführt ist. Aufgrund der Ausnehmung ist eine platzsparende Anordnung der zweiten Leiterplatte, z.B. zwischen der Hydraulikeinheit und dem Elektromotor, möglich.

Bevorzugt ist die Druckquelle als eine hydraulische Zylinder-Kolben-Anordnung ausgeführt, deren Kolben durch den Elektromotor mittels eines Rotations-Translations-Getriebes verschiebbar ist.

Bevorzugt ist/sind das oder die zweiten Sensorelemente benachbart zu dem durch die zweite Leiterplatte ragenden Teil der Druckquelle positioniert. Besonders bevorzugt sind die zweiten Sensorelemente um das durch die zweite Leiterplatte ragende Teil der Druckquelle positioniert. Vorteilhafterweise sind die zweiten Sensorelemente konzentrisch um das durch die zweite Leiterplatte ragende Teil der Druckquelle angeordnet. Somit sind die zweiten Sensorelemente konzentrisch um die Hohlwelle des Elektromotors angeordnet, wodurch die Messgenauigkeit erhöht wird.

Die zweite Leiterplatte kann einteilig oder mehrteilig ausgeführt sein. Bevorzugt ist die zweite Leiterplatte zweiteilig mit einem ersten und einem zweiten Leiterplattenteil ausgeführt, wobei das erste Sensorelement auf einem der Leiterplattenteile angeordnet ist. Besonders bevorzugt ist aus Kostengründen das erste Sensorelement nur auf einem der Leiterplattenteile, d.h. nicht redundant auf beiden Leiterplattenteilen, vorhanden.

Das oder die zweiten Sensorelemente ist/sind bevorzugt redundant, auf dem ersten und dem zweiten Leiterplattenteil vorgesehen.

Bei einer zweiteiligen Leiterplatte sind die Leiterplattenteile bevorzugt derart ausgebildet, dass sie die Ausnehmung zur Durchführung eines Teils der Druckquelle bilden.

Bevorzugt ist die Versorgung der zweiten Leiterplatte mit elektrischer Energie redundant ausgeführt. Besonders bevorzugt sind eine erste und eine zweite Energiequelle zur Versorgung der zweiten Leiterplatte vorhanden. Bei einer zweiteiligen Leiterplatte ist besonders bevorzugt je eine unabhängige elektrische Energiequelle für jedes der Leiterplattenteile vorgesehen.

Gemäß einer weiteren Weiterbildung des erfindungsgemäßen Kraftfahrzeugsteuergeräts sind auf der zweiten Leiterplatte außerdem elektrische und/oder elektronische Bauelemente zur Ansteuerung des Elektromotors angeordnet. Besonders bevorzugt ist die Leistungselektronik des Elektromotors auf der zweiten Leiterplatte angeordnet. Dies ermöglicht eine einfachere und kostengünstigere Abfuhr der Wärme der elektrischen und/oder elektronischen Bauelemente, da die hohen Ströme bei der Ansteuerung des Elektromotors getrennt von der ersten Leiterplatte der elektronischen Kontrolleinheit, nämlich nur auf der zweiten Leiterplatte, geführt werden. Eine aufwändige Kühlung für die hohe Ströme führenden elektrischen und/oder elektronischen Bauelemente ist nur bei der zweiten Leiterplatte notwendig. Die elektronische Kontrolleinheit bzw. die erste Leiterplatte führen dann nur vergleichsweise niedrige Ströme, die z.B. für die Ansteuerung der Ventile ausreichend sind, und so kann auf eine aufwändige Kühlung der ersten Leiterplatte bzw. in der elektronischen Kontrolleinheit verzichtet werden. Auch ist vorteilhaft, dass die erste Leiterplatte kostengünstiger, insbesondere mit geringeren Leitungsquerschnitten, ausgeführt sein kann. Weiterhin ist es vorteilhaft, dass keine aufwendige Durchkontaktierung, insbesondere von Hochstromleitungen, durch die Hydraulikeinheit erforderlich ist.

Bei einer zweiteiligen Leiterplatte sind bevorzugt die elektrischen und/oder elektronischen Bauelemente, insbesondere die Leistungselektronik, zur Ansteuerung des Elektromotors redundant, auf dem ersten und dem zweiten Leiterplattenteil ausgeführt. Dies ermöglicht eine Redundanz in der Normalbremsfunktion.

Gemäß einer anderen Weiterbildung des erfindungsgemäßen Kraftfahrzeugsteuergeräts ist ein Bremspedalgefühlsimulator zumindest teilweise in der Hydraulikeinheit angeordnet, wobei auf der ersten Leiterplatte der elektronischen Kontrolleinheit ein Drucksensor angeordnet ist, welcher einen Druck des Bremspedalgefühlsimulators erfasst. Dies ermöglicht eine Fahrerwunscherfassung für den Fall, dass das erste Sensorelement bzw. die erste Sensorvorrichung ausfällt (Rückfallebene).

Bevorzugt ist der Elektromotor direkt oder indirekt an der ersten Seitenfläche der Hydraulikeinheit befestigt.

Bevorzugt handelt es sich bei dem Elektromotor um eine bürstenlosen Gleichstrommotor.

Bevorzugt ist der Elektromotor von einem Motorgehäuse zumindest teilweise umfasst. Besonders bevorzugt ist das Motorgehäuse um den Elektromotor gespritzt.

Die elektrisch steuerbare, hydraulische Druckquelle ist bevorzugt zumindest teilweise innerhalb der Hydraulikeinheit angeordnet. Besonders bevorzugt ist ein Druckraum der Druckquelle zumindest teilweise innerhalb der Hydraulikeinheit angeordnet.

Die Hydraulikeinheit ist bevorzugt im Wesentlichen quaderförmig ausgebildet.

Der Hauptbremszylinder umfasst bevorzugt zumindest einen Kolben, der einen hydraulischen Druckraum begrenzt, wobei an den Druckraum Radbremsen anschließbar sind, und wobei der Kolben mittels einer Betätigungskräfte übertragenden Druckstange betätigbar ist.

Gemäß einer bevorzugten Ausführungsform der Erfindung sind die Ventile auf der dem Elektromotor entgegengesetzten Seitenfläche der Hydraulikeinheit angeordnet.

Bevorzugt ist an einer oberen Seitenfläche der Hydraulikeinheit ein unter Atmosphärendruck stehender Druckmittelvorratsbehälter befestigt.

Bevorzugt wird das Kraftfahrzeugsteuergerät in einer Bremsanlage für Kraftfahrzeuge eingesetzt, die in einer "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, in der nur der Betrieb durch den Fahrzeugführer möglich ist.

Weitere bevorzugte Ausführungsformen der Erfindung ergeben sich aus den Unteransprüchen und der nachfolgenden Beschreibung anhand von Figuren.

Es zeigen
- Fig. 1: ein erstes Ausführungsbeispiel eines erfindungsgemäßen elektrohydraulischen Kraftfahrzeugsteuergeräts,
- Fig. 2: eine erstes Ausführungsbeispiel einer zweiten Leiterplatte,
- Fig. 3: ein zweites Ausführungsbeispiel eines erfindungsgemäßen elektrohydraulischen Kraftfahrzeugsteuergeräts, und
- Fig. 4: eine zweites Ausführungsbeispiel einer zweiten Leiterplatte.

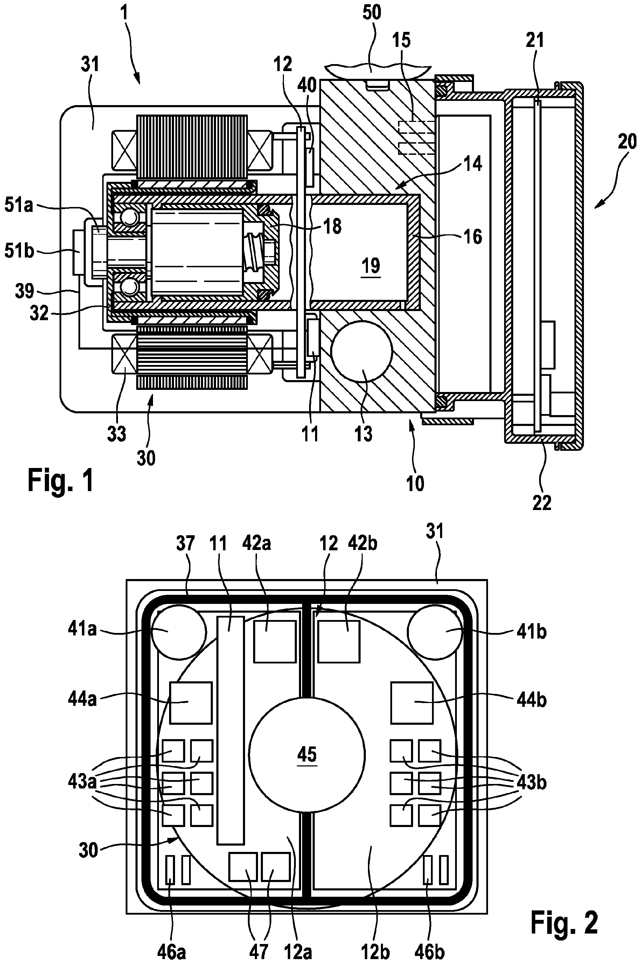

In Fig. 1 ist schematisch ein erstes Ausführungsbeispiel eines erfindungsgemäßen elektrohydraulischen Kraftfahrzeugsteuergeräts für ein Kraftfahrzeugbremssystem mit hydraulisch betätigbaren Radbremsen dargestellt. Kraftfahrzeugsteuergerät 1 umfasst eine Hydraulikeinheit 10 (HCU: hydraulic control unit) mit elektrisch betätigbaren Ventilen 15 und einem bremspedalbetätigbaren Hauptbremszylinder 13, eine elektronische Kontrolleinheit 20 (ECU: electronic control unit) und einen Elektromotor 30 zum Antreiben einer elektrisch steuerbaren, hydraulischen Druckquelle 14. Hauptbremszylinder 13 ist nur schematisch, in Form einer Zylinderbohrung in der Hydraulikeinheit 10 dargestellt. Elektromotor 30 ist an einer ersten Seitenfläche der Hydraulikeinheit 10 angeordnet. Getrennt von der elektronischen Kontrolleinheit 20, in einem Bereich der ersten Seitenfläche der Hydraulikeinheit 10 ist eine (zweite) Leiterplatte 12 angeordnet, auf welcher ein erstes Sensorelement 11 zur Erfassung einer Bremspedalbetätigung angeordnet ist.

Elektromotor 30 umfasst einen Rotor 32 und einen Stator 33 und ist beispielsgemäß als ein bürstenloser Gleichstrommotor ausgeführt. Elektromotor 30 wird beispielsgemäß von einem Motorgehäuse 31 zumindest teilweise umfasst. Motorgehäuse 31 ist als ein Kunststoffspritzteil ausgeführt.

Hauptbremszylinder 13 umfasst zumindest einen hydraulischen Druckraum und einen mittels einer Druckstange von einem Fahrzeugführer betätigbaren Betätigungskolben (nicht dargestellt), der den hydraulischen Druckraum begrenzt. An den Druckraum sind mittels hydraulischer Verbindungen die nicht dargestellten Radbremsen des Kraftfahrzeugbremssystems anschließbar. Hauptbremszylinder 13 dient z.B. der Druckbeaufschlagung der Radbremsen durch den Fahrer in einer Rückfallbetriebsart des Bremssystems, wenn die Radbremsen mit dem Druckraum des Hauptbremszylinders 13 verbunden sind. Die Längsachse des Hauptbremszylinders 13 ist vorteilhafterweise im Wesentlichen parallel zur Fahrtrichtung des Kraftfahrzeugs angeordnet.

Beispielsgemäß erfasst das erste Sensorelement 11 eine Verschiebung oder Position eines Kolbens (nicht dargestellt) des Hauptbremszylinders 13. Das erste Sensorelement 110 ist daher auf einer der Hydraulikeinheit zugewandten Fläche der zweiten Leiterplatte angeordnet. Das erste Sensorelement 11 ist beispielsgemäß Teil einer ersten Sensorvorrichtung zur Erfassung einer Bremspedalbetätigung. Diese umfasst einen auf dem Kolben des Hauptbremszylinders 13 angeordneten Weggeber (nicht dargestellt) und das erste Sensorelement 11 als Messaufnehmer oder Teil eines Messaufnehmers.

Neben dem ersten Sensorelement 11 ist z.B. auch die gesamte oder zumindest ein Teil der dem ersten Sensorelement bzw. der ersten Sensorvorrichtung zugeordnete Auswerteelektronik auf der zweiten Leiterplatte 12 angeordnet.

Leiterplatte 12 ist beispielsgemäß zwischen der ersten Seitenfläche der Hydraulikeinheit und dem Elektromotor angeordnet. Hierdurch kann die Leitungsführung der Signale des ersten Sensorelements 11 direkt auf der Leiterplatte 12 erfolgen. Dies ist nicht nur kostengünstig, es spart auch Baulänge des Elektromotors.

Auf der Leiterplatte 12 sind auch elektrische und/oder elektronische Bauelemente 40 zur Ansteuerung des Elektromotors 30 angeordnet. Auf Leiterplatte 12, d.h. auf der Elektromotorseite der Hydraulikeinheit 10, ist beispielsgemäß die Leistungselektronik 40 des Elektromotors 30 angeordnet. Dabei sind die elektronische Kontrolleinheit 20 einerseits und der Elektromotor 30 und die zweite Leiterplatte 12 andererseits an unterschiedlichen, z.B. gegenüberliegenden, Seitenflächen der Hydraulikeinheit 10 angeordnet. So kann die erste Leiterplatte 21 der elektronischen Kontrolleinheit 20 (welche keine Leistungselektronik-Bauelemente zur Ansteuerung des Elektromotors umfasst) ohne dicke Kupfer-Layer deutlich kostengünstiger ausgebildet werden. Die hochstromfähige, und damit teurere, zweite Leiterplatte 12 ist in Vergleich zur ersten Leiterplatte 21 kleiner.

Die elektrisch betätigbaren Ventile 15 der Hydraulikeinheit 10 sind z.B. zum Einstellen radindividueller Bremsdrücke an den Radbremsen und/oder zum Trennen/Verbinden der Druckquelle 14 oder des Hauptbremszylinders 13 mit den Radbremsen vorgesehen. Die elektronische Kontrolleinheit 20 umfasst eine (erste) Leiterplatte 21 mit elektrischen und/oder elektronischen Bauelementen zur Ansteuerung der Ventile 15.

Die elektrisch steuerbare Druckquelle 14 ist beispielsgemäß als eine hydraulische Zylinder-Kolben-Anordnung ausgeführt, deren Kolben 18 in einem Zylinder 16 durch den Elektromotor 30 mittels eines Rotations-Translations-Getriebes 17 entlang der Längsachse (Zylinderachse) der Zylinder-Kolben-Anordnung verschiebbar ist. Das Getriebe 17 ist beispielsgemäß als ein Kugelgewindetrieb oder Rollengewindetrieb ausgebildet. Weiterhin ist eine der Erfassung der Rotorlage des Elektromotors 30 dienende, lediglich schematisch angedeutete Rotorlagesensorik mit einem Positionsgeber 51a und einem Messaufnehmer 51b vorhanden.

In einer "Brake-by-wire"-Betriebsart des Bremssystems können die Radbremsen mittels des Druckes in Druckraum 19 der Druckquelle 14 betätigt werden. Hierzu ist der Elektromotor 30 nach Maßgabe einer Bremspedalbetätigung, welche vorteilhafterweise mittels des ersten Sensorelements 11 erfasst wird, ansteuerbar.

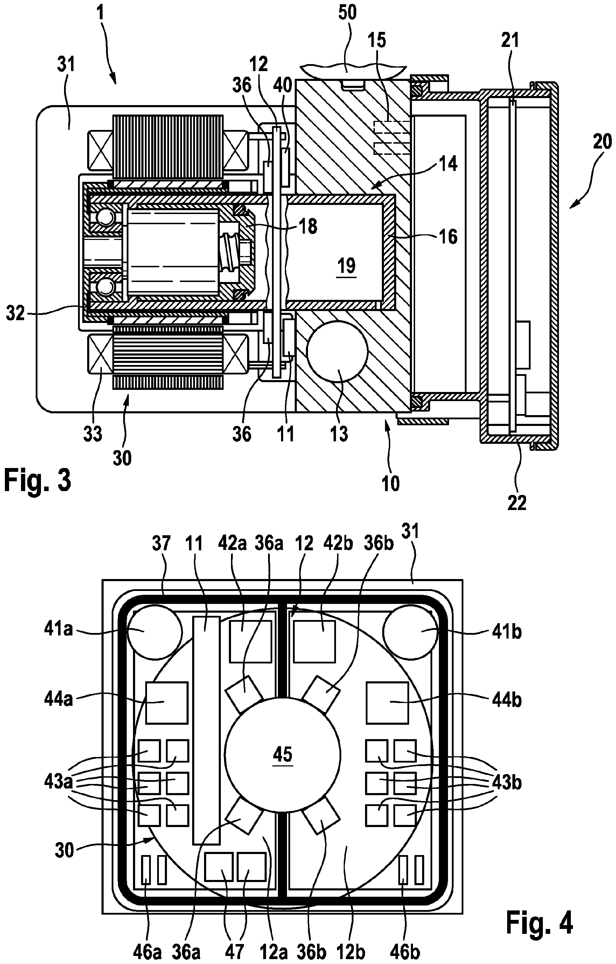

Druckquelle 14 ist zumindest teilweise innerhalb der Hydraulikeinheit 10 angeordnet. Beispielsgemäß erstreckt sich Zylinder 16 durch die Leiterplatte 12, welche hierzu ein Ausnehmung aufweist (siehe Bezugszeichen 45 in Fig. 2, 4), in die Hydraulikeinheit 10. Aufgrund der Ausnehmung ist eine platzsparende Anordnung der zweiten Leiterplatte 12 zwischen der Hydraulikeinheit 10 und dem Elektromotor 30 möglich.

An einer oberen Seitenfläche der Hydraulikeinheit 10 ein unter Atmosphärendruck stehender Druckmittelvorratsbehälter 50 angeordnet.

Der Hauptbremszylinder 13, die Ventile 15 und die Druckquelle 14 sind ganz oder mindestens zum Teil innerhalb der Hydraulikeinheit 10 angeordnet.

Hydraulikeinheit 10 umfasst weiterhin (nicht dargestellte) hydraulische Anschlüsse für die Verbindungen zu den Radbremsen.

Die Längsachse des Elektromotors 30 ist senkrecht oder annähernd senkrecht zur Längsachse des Hauptbremszylinders 13 angeordnet. Ebenso ist die Längsachse der Druckquelle 14 senkrecht oder annähernd senkrecht zur Längsachse des Hauptbremszylinders 13 angeordnet. Elektromotor 30 und Zylinder-Kolben-Anordnung der Druckquelle 14 sind auf einer gemeinsamen Achse, fluchtend angeordnet.

Kontrolleinheit 20 umfasst die Leiterplatte 21, auf welcher elektrische und/oder elektronische Bauelemente zur Ansteuerung der Ventile 15 der Hydraulikeinheit 10 angeordnet sind. Weiterhin ist auf der ersten Leiterplatte 21 mindestens ein Anschlussstecker vorgesehen, zur Versorgung der elektronischen Kontrolleinheit 20 bzw. der Leiterplatte 21 mit elektrischer Energie. Die Leiterplatte 21 wird vorteilhafterweise durch ein Steuergerätgehäuse 22 geschützt.

Kontrolleinheit 20 dient zumindest der Ansteuerung der Ventile 15 und ist beispielsgemäß an einer zweiten, dem Elektromotor 30 entgegengesetzten Seitenfläche der Hydraulikeinheit 10 angeordnet. Die elektrischen Verbindungen zwischen dem Elektromotor 30 und der Kontrolleinheit 20, z.B. zur Übertragung von (Sensor)Signalen, erstrecken sich zum Schutz der elektrischen Verbindungen vorteilhafterweise durch die Hydraulikeinheit 10.

Die Ventile 15 sind vorteilhafterweise ebenfalls auf der dem Elektromotor 30 entgegengesetzten Seitenfläche der Hydraulikeinheit 10 angeordnet, so dass eine einfache elektrische oder magnetische Verbindung zwischen Ventilen 15 und elektronischer Kontrolleinheit 20 möglich ist. Die Ventile 15 werden vorteilhafterweise von dem Steuergerätgehäuse 22 abgedeckt.

Vorteilhafterweise umfasst das Kraftfahrzeugsteuergerät 1 einen Bremspedalgefühlsimulator (nicht dargestellt), welcher in der "Brake-by-wire"-Betriebsart dem Fahrzeugführer ein angenehmes Bremspedalgefühl vermittelt. Bremspedalgefühlsimulator kann sich ganz oder teilweise innerhalb des Hydraulikeinheit 10 erstreckt. Alternativ kann der Bremspedalgefühlsimulator als eigenständiges Modul ausgeführt sein. Vorteilhafterweise ist auf der Leiterplatte 21 der elektronischen Kontrolleinheit 20 ein Drucksensor angeordnet, welcher einen Druck des Bremspedalgefühlsimulators erfasst. Dessen Signal kann in einer Rückfallebene des Bremssystems, z.B. wenn die Leiterplatte 12 mit dem ersten Sensorelement 11 defekt ist oder nicht mehr mit elektrischer Energie versorgt werden kann, zur Erfassung der Bremspedalbetätigung (des Fahrerbremswunsches) verwendet werden.

Zur Versorgung des Kraftfahrzeugsteuergeräts 1 mit elektrischer Energie sind beispielsgemäß eine erste elektrische Energieversorgungseinheit und eine zweite elektrische Energieversorgungseinheit vorgesehen (nicht dargestellt in Fig. 1), wobei die beiden Energieversorgungseinheiten unabhängig voneinander sind.

In Fig. 2 ist ein erstes Ausführungsbeispiel einer zweiten Leiterplatte 12 dargestellt. Fig. 2 zeigt weiterhin das Motorgehäuse 31, eine Dichtung 37 und schematisch durch einen Kreis angedeutet, den hinter der Leiterplatte 12 angeordneten Elektromotor 30. Leiterplatte 12 ist beispielsgemäß zweiteilig mit einem ersten Leiterplattenteil 12a und einem zweiten Leiterplattenteil 12b ausgebildet und weist eine Ausnehmung 45 zur Durchführung der Druckquelle 14 auf. Hierzu sind die Leiterplattenteile 12a, 12b derart, beispielsgemäß mit je einer halbkreisförmigen Aussparung, ausgeformt, dass sie eine kreisförmige Ausnehmung 45 zur Durchführung der Druckquelle 14 bilden. Leiterplatte 12 kann aber auch einteilig ausgeführt sein. Das erste Sensorelement 11 ist auf der Leiterplatte 12 (beispielsgemäß Leiterplattenteil 12a) angeordnet. Auf Leiterplatte 12 (beispielsgemäß Leiterplattenteil 12a) sind weiterhin beispielsgemäß zumindest ein Kondensator 41a, ein Mikrocontroller 42a zur Steuerung/Regelung des Elektromotors 30, zumindest ein Treiber-Bauelement 43a, ein weiterer Mikrocontroller 44a (GDU: Gate Driver Unit) und ein Verbindungselement 46a zur Verbindung mit einer elektrischen Energiequelle vorgesehen.

Die GDU 44a ist bevorzugt ein integrierter Schaltungsbaustein mit Elementen, die die Brückentreiber 43a ansteuern und überwachen. Die Bausteine werden bei dreiphasigen bürstenlosen Motoren zur Ansteuerung verwendet. Alternativ können die Treiber 43a in die GDU 44a integriert sein.

Die Leistungselektronik 40 (siehe Fig. 1) zur Ansteuerung des Elektromotors 30, welche auf der zweiten Leiterplatte 12 (beispielsgemäß Leiterplattenteil 12a) angeordnet ist, umfasst bevorzugt sechs Treiber-Bauelemente 43a und die GDU 44a.

Die Elektronik der Leiterplatte 12 ist vorteilhafterweise redundant auf den beiden Leiterplattenteilen 12a, 12b ausgeführt. So sind beispielsgemäß auf jeder der Leiterplattenteile 12a, 12b ein Kondensator 41a bzw. 41b, ein Mikrocontroller 42a bzw. 42b zur Steuerung/Regelung des Elektromotors 30, zumindest ein Treiber-Bauelement 43a bzw. 43b (bevorzugt sechs Treiber-Bauelemente 43a bzw. 43b), eine GDU 44a bzw. 44b und ein Verbindungselement 46a bzw. 46b zur Verbindung mit einer elektrischen Energiequelle vorgesehen.

Das erste Sensorelement ist nur auf einem der Leiterplattenteile, beispielsgemäß dem Leiterplattenteil 12a, angeordnet.

Vorteilhafterweise wird jedes Leiterplattenteil 12a, 12b von einer separaten elektrischen Energiequelle versorgt (redundante Energieversorgung).

Vorteilhafterweise befindet sich auf Leiterplatte 12, beispielsgemäß auf einem der Leiterplattenteile 12a, zumindest ein Treiber 47 zur Ansteuerung einer elektrischen Parkbremse oder integrierten Parkbremse.

In Fig. 3 ist ein zweites Ausführungsbeispiel eines erfindungsgemäßen elektrohydraulischen Kraftfahrzeugsteuergeräts, schematisch dargestellt, und in Fig. 4 ist ein zweites Ausführungsbeispiel einer zweiten Leiterplatte 12 schematisch dargestellt. Diese Ausführungsbeispiele unterscheiden sich von den in den Fig. 1 und 2 dargestellten Ausführungsbeispielen durch die Sensorik zur Erfassung einer Lage oder Position des Elektromotors 30. Beispielsgemäß sind auf der zweiten Leiterplatte 12 zwei zweite Sensorelemente 36 zur Erfassung eines Drehwinkels des Rotors 32 des Elektromotors 30 vorhanden. Die Sensorelemente 36 sind auf der dem Elektromotor 30 zugewandten Fläche der zweiten Leiterplatte 12 angeordnet.

Leiterplatte 12 ist beispielsgemäß zwischen der ersten Seitenfläche der Hydraulikeinheit 10 und dem Elektromotor 30 angeordnet. So kann die Leitungsführung der Sensorsignale von erstem Sensorelement 11 und zweiten Sensorelementen 36 direkt auf der zweiten Leiterplatte 12 erfolgen. Dies ist nicht nur kostengünstig, es spart auch Baulänge des Motors.

Die zweiten Sensorelemente 36 sind z.B. Teil einer (zweiten) Sensorvorrichtung zur Erfassung einer Lage oder Position des Elektromotors. Hierbei umfasst die zweite Sensorvorrichtung einen auf einem rotierenden Teil des Elektromotors 30 angeordneten Positionsgeber (nicht dargestellt) und einen Messaufnehmer, welcher durch die zweiten Sensorelement 36 gebildet wird oder diese umfasst.

Neben den Sensorelementen 36 ist auch die gesamte oder zumindest ein Teil der dem zweiten Sensorelement bzw. der zweiten Sensorvorrichtung zugeordnete Auswerteelektronik beispielsgemäß auf der zweiten Leiterplatte 12 angeordnet.

Vorteilhafterweise sind die zweiten Sensorelemente 36 benachbart zu dem durch die zweite Leiterplatte 12 ragenden Kolben 16 der Druckquelle 14 positioniert, z.B. sind die zweiten Sensorelemente 36 konzentrisch um den Kolben 16, und damit die Hohlwelle des Elektromotors 30, angeordnet.

Wie der Fig. 4 zu entnehmen ist, ist die Leiterplatte 12 beispielsgemäß zweiteilig mit dem ersten Leiterplattenteil 12a und dem zweiten Leiterplattenteil 12b ausgebildet, wobei die zweiten Sensorelemente 36 redundant, auf dem ersten und dem zweiten Leiterplattenteil 12a, 12b vorgesehen. D.h. auf dem Leiterplattenteil 12a sind zwei zweite Sensorelemente 36a zur Erfassung des Drehwinkels des Rotors 32 vorhanden und auf dem Leiterplattenteil 12b sind zwei zweite Sensorelemente 36b zur Erfassung des Drehwinkels des Rotors 32 vorhanden.

Vorteilhafterweise sind alle zweiten Sensorelemente 36a, 36b konzentrisch um den Kolben 16, und damit die Hohlwelle des Elektromotors 30, und auf der dem Elektromotor 30 zugewandten Fläche der zweiten Leiterplatte 12 angeordnet.

Bei bekannten elektrohydraulischen Kraftfahrzeugsteuergeräten sind die Positionssensorik des Pedalweges (erstes Sensorelement) und die Positionssensorik des Elektromotors (zweites Sensorelement) in die elektronische Kontrolleinheit integriert, welche auf der dem Elektromotor gegenüberliegenden Seite der Hydraulikeinheit (d.h. Ventilseitig) angeordnet ist. Beide Sensoren können bei geringem Abstand durch die magnetischen Fremdfelder (z.B. der Ventilspulen) beeinflusst und so ihre Signale verfälscht werden. Weiterhin ist für die mechanische Übertragung der Drehbewegung des Elektromotors auf die Seite der elektronischen Kontrolleinheit ein aufwendiges und teures Getriebe vorzusehen.

Um die genannten Nachteile aufzuheben, wird bevorzugt die gesamte Positionssensorik (erstes Sensorelement 11 und zweites Sensorelement 36 und insbesondere zugehörige Sensorelektronik) oder zumindest ein Teil der Positionssensorik (z.B. das erste Sensorelement 11 und insbesondere zugehörige Sensorelektronik, oder z.B. das zweite Sensorelement 36 und insbesondere zugehörige Sensorelektronik) getrennt von der elektronischen Kontrolleinheit 20 auf einer zweiten Leiterplatte 12 angeordnet, welche in einem Bereich der Elektromotorseitigen Seitenfläche der Hydraulikeinheit 10 angeordnet ist. Dies bringt Vorteile in Bezug auf das Boxvolumen, die Kosten und die Performance.

Weiterhin wird dadurch bezüglich der Motor-Positionssensorik die aufwendige Durchführung der mechanischen Motor-Drehbewegung durch die Hydraulikeinheit 10 nicht mehr erforderlich.

Besonders vorteilhaft ist die Anordnung der Positionssensorelemente 11, 36 zwischen Elektromotor 30 und Hydraulikeinheit 10. Hierdurch kann die Leitungsführung der Signale direkt auf der motorseitigen Leiterplatte 12 erfolgen. Dies ist nicht nur kostengünstig, es spart auch Baulänge des Motors 30. Vorteilhafterweise basieren die erste Sensorvorrichtung und die zweite Sensorvorrichtung auf dem gleichen Messprinzip, dies vereinfacht die Sensor-Auswerteelektronik auf der zweiten Leiterplatte 12. Besonders bevorzugt wird ein Wirbelstrom-Meßprinzip angewendet, welches unempfindlich gegenüber magnetischen Störfeldern ist. Auf der zweiten Leiterplatte 12 ist für die Sensorik ausreichend Platz, eine Unterbringung auf der Leiterplatte 21 der elektronischen Kontrolleinheit 20 ist nicht notwendig.

Bevorzugt ist die Motorpositionssensorik doppelt ausgeführt, d.h. das oder die zweiten Sensorelemente 36 sind auf zwei getrennten, motorseitigen zweiten Leiterplattenteilen 12a, 12b mit unterschiedlicher Bordnetzversorgung angeordnet.

Für die Sensierung des Pedalweges (erste Sensorvorrichtung) kann das LIPS-Prinzip (Linear Inductive Position Sensor: Induktiver Linearwegsensor) genutzt werden. Hierbei ist eine Meßspulengruppe (als Messaufnehmer) auf der motorseitigen Leiterplatte 12 unmittelbar an der Hydraulikeinheit 10 angeordnet. Der Positionsgeber ist z.B. ein Magnet im Druckraum des Hauptbremszylinders 13. Maßnahmen zur Schirmung zu den Rotor-Magneten sind mittels Schirmungsblech(en) denkbar. Es kann aber auch ein metallisches Target (Positionsgeber), welches mechanisch mit der Bremspedalstange/Druckstange verbunden ist, in einer Kammer an der Hydraulikeinheit 10 bewegt werden. Dessen Bewegung wird durch eine dichtende Trennwand von einer Spule, die auf der motorseitigen Leiterplatte 12 aufgedruckt ist, sensiert (Messaufnehmer). Dieses Prinzip ist weitestgehend unempfindlich gegen magnetische Störfelder.

Ein weiterer Vorteil der Trennung der Positionssensor-Elektronik (auf Leiterplatte 12) von der Elektronik der elektronischen Kontrolleinheit (auf Leiterplatte 21) ist die Reduzierung der Anzahl der möglichen commen-mode-Fehler bei redundanter Auslegung der Elektronik. So kann beispielsweise die redundante Spannungsversorgung der Sensoren (ggf. auch 48 Volt) vollständig von der elektronischen Kontrolleinheit 20 ferngehalten werden.

Durch die Kombination mit einer ebenfalls auf der Elektromotorseitigen Leiterplatte 12 angeordneten Leistungselektronik für den Elektromotor 30 kann:
- die selbe Leiterplatte 12 benutzt werden,
- der vorhandene Mikrocontroller 42a oder 42b synergetisch sowohl Kommutierungsberechnungen des Elektromotors 30 als auch Sensorsignalaufbereitungsberechnungen der ersten und zweiten Sensorvorrichtung (11, 36) durchführen,
- eine vollständig autarke Normalbremsfunktion dargestellt werden, die mit der Erfassung des Fahrerbremswunsches (Pedalwegsensorsignal) beginnt, der Berechnung des Sollbremsdruckwertes und der Berechnung der zugehörigen Drehwinkelposition fortgeführt wird, bis hin, dass der Elektromotor 30 entsprechend angesteuert wird.

## Patentansprüche

1. Elektrohydraulisches Kraftfahrzeugsteuergerät (1), insbesondere für ein Kraftfahrzeugbremssystem, umfassend eine Hydraulikeinheit (10) mit elektrisch betätigbaren Ventilen (15) und einem bremspedalbetätigbaren Hauptbremszylinder (13), eine elektronische Kontrolleinheit (20), welche eine erste Leiterplatte (21) mit elektrischen und/oder elektronischen Bauelementen zur Ansteuerung der Ventile (15) umfasst, und einen Elektromotor (30) zum Antreiben einer elektrisch steuerbaren, hydraulischen Druckquelle (14), welcher an einer erste Seitenfläche der Hydraulikeinheit (10) angeordnet ist, **dadurch gekennzeichnet, dass** eine zweite Leiterplatte (12) vorgesehen ist, welche in einem Bereich der ersten Seitenfläche der Hydraulikeinheit (10) angeordnet ist, wobei auf der zweiten Leiterplatte (12) ein erstes Sensorelement (11) zur Erfassung einer Bremspedalbetätigung angeordnet ist.

2. Kraftfahrzeugsteuergerät (1) nach Anspruch 1, **dadurch gekennzeichnet, dass** das erste Sensorelement (11) zur Erfassung einer Bremspedalbetätigung auf einer der Hydraulikeinheit (10) zugewandten Fläche der zweiten Leiterplatte (12) angeordnet ist.

3. Kraftfahrzeugsteuergerät (1) nach Anspruch 1 oder 2, **dadurch gekennzeichnet, dass** die zweite Leiterplatte (12) zwischen der ersten Seitenfläche der Hydraulikeinheit (10) und dem Elektromotor (30) angeordnet ist.

4. Kraftfahrzeugsteuergerät (1) nach einem der vorhergehenden Ansprüche, **dadurch gekennzeichnet, dass** auf der zweiten Leiterplatte (12) ein oder mehrere zweite Sensorelemente (36) zur Erfassung einer Lage oder Position des Elektromotors (30) angeordnet ist/sind.

5. Kraftfahrzeugsteuergerät (1) nach Anspruch 4, **dadurch gekennzeichnet, dass** das oder die zweiten Sensorelemente (36) auf einer dem Elektromotor (30) zugewandten Fläche der zweiten Leiterplatte (12) angeordnet ist/sind.

6. Kraftfahrzeugsteuergerät (1) nach einem der vorhergehenden Ansprüche, **dadurch gekennzeichnet, dass** die zweite Leiterplatte (12) eine Ausnehmung (45) aufweist, durch welche ein Teil der Druckquelle (14), insbesondere ein Zylinder (16) der Druckquelle (14), ragt.

7. Kraftfahrzeugsteuergerät (1) nach Anspruch 6, wenn rückbezogen auf Anspruch 4, **dadurch gekennzeichnet, dass** das oder die zweiten Sensorelemente (36) benachbart zu dem durch die zweite Leiterplatte (12) ragenden Teil der Druckquelle (14) angeordnet ist/sind, insbesondere dass die zweiten Sensorelemente (36) um das durch die zweite Leiterplatte (12) ragende Teil der Druckquelle (14) angeordnet sind.

8. Kraftfahrzeugsteuergerät (1) nach einem der vorhergehenden Ansprüche, **dadurch gekennzeichnet, dass** die zweite Leiterplatte (12) zweiteilig mit einem ersten und einem zweiten Leiterplattenteil (12a, 12b) ausgeführt ist, wobei das erste Sensorelement, insbesondere nur, auf einem der Leiterplattenteile (12a) angeordnet ist.

9. Kraftfahrzeugsteuergerät (1) nach Anspruch 8, wenn rückbezogen auf Anspruch 4, **dadurch gekennzeichnet, dass** das oder die zweiten Sensorelemente (36) redundant, auf dem ersten und dem zweiten Leiterplattenteil (12a, 12b) ausgeführt ist/sind.

10. Kraftfahrzeugsteuergerät (1) nach Anspruch 8 oder 9, wenn rückbezogen auf Anspruch 6, **dadurch gekennzeichnet, dass** die Leiterplattenteile (12a, 12b) derart ausgebildet sind, dass sie die Ausnehmung (45) zur Durchführung eines Teils der Druckquelle (14) bilden.

11. Kraftfahrzeugsteuergerät (1) nach einem der vorhergehenden Ansprüche, **dadurch gekennzeichnet, dass** das erste Sensorelement (11) eine Verschiebung oder Position eines verschiebbaren Teils, insbesondere eines Kolbens, des Hauptbremszylinders (13) erfasst.

12. Kraftfahrzeugsteuergerät (1) nach einem der vorhergehenden Ansprüche, **dadurch gekennzeichnet, dass** Leistungselektronik-Bauelemente zur Ansteuerung des Elektromotors (30) auf der zweiten Leiterplatte (12) angeordnet sind.

13. Kraftfahrzeugsteuergerät (1) nach einem der vorhergehenden Ansprüche, **dadurch gekennzeichnet, dass** ein Bremspedalgefühlsimulator zumindest teilweise in der Hydraulikeinheit (10) angeordnet ist, wobei auf der ersten Leiterplatte (21) der elektronischen Kontrolleinheit (20) ein Drucksensor angeordnet ist, welcher einen Druck des Bremspedalgefühlsimulators erfasst.

## Claims

1. Electrohydraulic motor vehicle control device (1), in particular for a motor vehicle brake system, comprising a hydraulic unit (10) with electrically activated valves (15) and a brake-pedal-activated master brake cylinder (13), an electronic control unit (20) which comprises a first printed circuit board (21) with electrical and/or electronic components for actuating the valves (15), and an electric motor (30) for driving an electrically controllable, hydraulic pressure source (14) which is arranged on a first side face of the hydraulic unit (10), **characterized in that** a second printed circuit board (12) is provided which is arranged in a region of the first side face of the hydraulic unit (10), wherein a first sensor element (11) for sensing activation of a brake pedal is arranged on the second printed circuit board (12).

2. Motor vehicle control device (1) according to Claim 1, **characterized in that** the first sensor element (11) for sensing activation of a brake pedal is arranged on a face of the second printed circuit board (12) which faces the hydraulic unit (10).

3. Motor vehicle control device (1) according to Claim 1 or 2, **characterized in that** the second printed circuit board (12) is arranged between the first side face of the hydraulic unit (10) and the electric motor (30).

4. Motor vehicle control device (1) according to one of the preceding claims, **characterized in that** one or more second sensor elements (36) for sensing a location or position of the electric motor (30) is/are arranged on the second printed circuit board (12) .

5. Motor vehicle control device (1) according to Claim 4, **characterized in that** the second sensor element or elements (36) is/are arranged on a face of the second printed circuit board (12) which faces the electric motor (30).

6. Motor vehicle control device (1) according to one of the preceding claims, **characterized in that** the second printed circuit board (12) has an opening (45) through which part of the pressure source (14), in particular a cylinder (16) of the pressure source (14), projects.

7. Motor vehicle control device (1) according to Claim 6, if referred back to Claim 4, **characterized in that** the second sensor element or elements (36) is/are arranged adjacent to the part of the pressure source (14) which projects through the second printed circuit board (12), in particular **in that** the second sensor elements (36) are arranged around the part of the pressure source (14) which projects through the second printed circuit board (12).

8. Motor vehicle control device (1) according to one of the preceding claims, **characterized in that** the second printed circuit board (12) is embodied in two parts with a first and a second printed circuit board part (12a, 12b), wherein the first sensor element is arranged, in particular only, on one of the printed circuit board parts (12a).

9. Motor vehicle control device (1) according to Claim 8, if referred back to Claim 4, **characterized in that** the second sensor element or elements (36) is/are embodied redundantly on the first and the second printed circuit board parts (12a, 12b).

10. Motor vehicle control device (1) according to Claim 8 or 9, if referred back to Claim 6, **characterized in that** the printed circuit board parts (12a, 12b) are embodied in such a way that they form the opening (45) for leading through part of the pressure source (14) .

11. Motor vehicle control device (1) according to one of the preceding claims, **characterized in that** the first sensor element (11) senses the shifting of or the position of a shiftable part, in particular a piston, of the master brake cylinder (13).

12. Motor vehicle control device (1) according to one of the preceding claims, **characterized in that** the power electronics components for actuating the electric motor (30) are arranged on the second printed circuit board (12).

13. Motor vehicle control device (1) according to one of the preceding claims, **characterized in that** a brake pedal sensation simulator is arranged at least partially in the hydraulic unit (10), wherein a pressure sensor which senses a pressure of the brake pedal sensation simulator is arranged on the first printed circuit board (21) of the electronic control unit (20).

## Revendications

1. Appareil électrohydraulique de commande de véhicule automobile (1), en particulier pour un système de freinage de véhicule automobile, comprenant une unité hydraulique (10) pourvue de soupapes à actionnement électrique (15) et un maître-cylindre de frein (13) à actionnement par la pédale de frein, une unité de contrôle électronique (20) qui comprend une première carte de circuits imprimés (21) pourvue de composants électriques et/ou électroniques pour piloter les soupapes (15), et un moteur électrique (30) pour entraîner une source de pression hydraulique (14) à commande électrique qui est disposée sur une première surface latérale de l'unité hydraulique (10),
**caractérisé en ce qu'**une deuxième carte de circuits imprimés (12) est prévue qui est disposée dans une zone de la première surface latérale de l'unité hydraulique (10), un premier élément de capteur (11) pour la détection d'un actionnement de la pédale de frein étant disposé sur la deuxième carte de circuits imprimés (12).

2. Appareil de commande de véhicule automobile (1) selon la revendication 1, **caractérisé en ce que** le premier élément de capteur (11) pour détecter un actionnement de la pédale de frein est disposé sur une surface, tournée vers l'unité hydraulique (10), de la deuxième carte de circuits imprimés (12).

3. Appareil de commande de véhicule automobile (1) selon la revendication 1 ou 2, **caractérisé en ce que** la deuxième carte de circuits imprimés (12) est disposée entre la première surface latérale de l'unité hydraulique (10) et le moteur électrique (30).

4. Appareil de commande de véhicule automobile (1) selon l'une quelconque des revendications précédentes, **caractérisé en ce qu'**un ou plusieurs éléments de capteur (36) pour détecter un emplacement ou une position du moteur électrique (30) est/sont disposé(s) sur la deuxième carte de circuits imprimés (12).

5. Appareil de commande de véhicule automobile (1) selon la revendication 4, **caractérisé en ce que** le (s) deuxième(s) élément(s) de capteur (36) est/sont disposé(s) sur une surface, tournée vers le moteur électrique (30), de la deuxième carte de circuits imprimés (12).

6. Appareil de commande de véhicule automobile (1) selon l'une quelconque des revendications précédentes, **caractérisé en ce que** la deuxième carte de circuits imprimés (12) présente un évidement (45) à travers lequel une partie de la source de pression (14), en particulier un cylindre (16) de la source de pression (14), fait saillie.

7. Appareil de commande de véhicule automobile (1) selon la revendication 6 lorsqu'elle dépend de la revendication 4, **caractérisé en ce que** le(s) deuxième(s) élément(s) de capteur (36) est/sont disposé(s) de manière adjacente à la partie, faisant saillie à travers la deuxième carte de circuits imprimés (12), de la source de pression (14), en particulier **en ce que** les deuxièmes éléments de capteur (36) sont disposés autour de la partie, faisant saillie à travers la deuxième carte de circuits imprimés (12), de la source de pression (14).

8. Appareil de commande de véhicule automobile (1) selon l'une quelconque des revendications précédentes, **caractérisé en ce que** la deuxième carte de circuits imprimés (12) est réalisée en deux parties avec une première et une deuxième partie de carte de circuits imprimés (12a, 12b), le premier élément de capteur étant disposé, en particulier uniquement, sur l'une des parties de carte de circuits imprimés (12a).

9. Appareil de commande de véhicule automobile (1) selon la revendication 8 lorsqu'elle dépend de la revendication 4, **caractérisé en ce que** le(s) deuxième(s) élément(s) de capteur (36) est/sont réalisé(s) de manière redondante sur la première et la deuxième partie de carte de circuits imprimés (12a, 12b) .

10. Appareil de commande de véhicule automobile (1) selon la revendication 8 ou 9 lorsqu'elle dépend de la revendication 6, **caractérisé en ce que** les parties de carte de circuits imprimés (12a, 12b) sont réalisées de telle sorte qu'elles forment l'évidement (45) pour le passage d'une partie de la source de pression (14).

11. Appareil de commande de véhicule automobile (1) selon l'une quelconque des revendications précédentes, **caractérisé en ce que** le premier élément de capteur (11) détecte un décalage ou une position d'une partie coulissante, en particulier d'un piston, du maître-cylindre de frein (13).

12. Appareil de commande de véhicule automobile (1) selon l'une quelconque des revendications précédentes, **caractérisé en ce que** des composants d'électronique de puissance pour piloter le moteur électrique (30) sont disposés sur la deuxième carte de circuits imprimés (12) .

13. Appareil de commande de véhicule automobile (1) selon l'une quelconque des revendications précédentes, **caractérisé en ce qu'**un simulateur de sensation de pédale de frein est disposé au moins en partie dans l'unité hydraulique (10), dans lequel, sur la première carte de circuits imprimés (21) de l'unité de contrôle électronique (20), un capteur de pression est disposé qui détecte une pression du simulateur de sensation de pédale de frein.
